(19) Europäisches Patentamt
European Patent Office
Office européen des brevets

(11) EP 2 177 566 B1

(12) **EUROPEAN PATENT SPECIFICATION**

(45) Date of publication and mention of the grant of the patent:
**03.05.2017 Bulletin 2017/18**

(21) Application number: **08777792.6**

(22) Date of filing: **02.07.2008**

(51) Int Cl.:
***C08L 57/00*** (2006.01) ***C08K 5/1525*** (2006.01)
***A61F 13/15*** (2006.01) ***A61F 13/49*** (2006.01)
***A61F 13/53*** (2006.01) ***C08F 8/00*** (2006.01)

(86) International application number:
**PCT/JP2008/061992**

(87) International publication number:
**WO 2009/013978 (29.01.2009 Gazette 2009/05)**

(54) **METHOD FOR PRODUCTION OF WATER-ABSORBABLE RESIN, AND WATER-ABSORBABLE RESIN PRODUCED BY THE METHOD**

VERFAHREN ZUR HERSTELLUNG VON WASSERABSORBIERBAREM HARZ UND DANACH HERGESTELLTES WASSERABSORBIERBARES HARZ

PROCÉDÉ DE PRODUCTION DE RÉSINE ABSORBANT L'EAU ET RÉSINE ABSORBANT L'EAU OBTENUE GRÂCE À CE PROCÉDÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.07.2007 JP 2007193371**

(43) Date of publication of application:
**21.04.2010 Bulletin 2010/16**

(73) Proprietor: **SUMITOMO SEIKA CHEMICALS CO., LTD.**
**Kako-gun, Hyogo 675-0145 (JP)**

(72) Inventors:
- **TAKATORI, Junichi**
  **Himeji-shi**
  **Hyogo 672-8076 (JP)**
- **HANDA, Masayoshi**
  **Himeji-shi**
  **Hyogo 672-8076 (JP)**
- **NAWATA, Yasuhiro**
  **Kako-gun**
  **Hyogo 675-0145 (JP)**

(74) Representative: **Vossius & Partner**
**Patentanwälte Rechtsanwälte mbB**
**Siebertstrasse 3**
**81675 München (DE)**

(56) References cited:
**EP-A2- 1 199 327**
**WO-A1-2006/033477**
**WO-A1-2006/109552**
**JP-A- 2001 115 006**
**JP-A- 2002 194 239**
**JP-A- 2003 313 446**
**JP-A- 2004 233 635**
**JP-A- 2005 258 460**
**JP-A- 2007 145 835**

- **DATABASE WPI Week 200219 Thomson Scientific, London, GB; AN 2002-142501 XP002600710 & JP 2001 115006 A (UBE IND LTD) 24 April 2001 (2001-04-24)**
- **DATABASE WPI Week 200425 Thomson Scientific, London, GB; AN 2004-260003 XP002600723 & JP 2003 313446 A (NIPPON SHOKUBAI CO LTD) 6 November 2003 (2003-11-06)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 177 566 B1

## Description

### TECHNICAL FIELD

The present invention relates to a method for producing a water-absorbent resin and a water-absorbent resin obtained by the method. More specifically, the present invention relates to a method for producing a water-absorbent resin which can be preferably used in hygienic materials such as disposable diaper, incontinence pad and sanitary napkin; and a water-absorbent resin obtained by the method.

### BACKGROUND ART

Conventionally, a water-absorbent resin has been widely used in hygienic materials such as disposable diaper and sanitary napkin, and industrial materials such as water blocking materials for cables. As the water-absorbent resin, there has been known, for example, hydrolysates of starch-acrylonitrile graftpolymers, neutralized products of starch-acrylate graftpolymers, saponified products of vinyl acetate-acrylic ester copolymers, partially neutralized products of polyacrylic acid, and the like.

Among them, it has been desired that the water-absorbent resin used in hygienic materials is excellent in properties such as water-retention capacity (absorption capacity), water-absorption capacity under load, water-absorption rate, and particle size distribution. In the past, in order to improve particularly the water-retention capacity and the water-absorption capacity under load of the above-mentioned properties, there is proposed a method of increasing a crosslinking density on a surface vicinity of the water-absorbent resin (post-crosslinking method).

Also, the water-absorbent resin used in disposable diaper, sanitary napkin and the like is required to have reduced water-soluble substance and to be excellent in safety, besides the above-mentioned properties. For instance, in the case where there is a large amount of the water-soluble substance, the water-soluble substance is eluted after liquid absorption, and slimy liquid is adhered to the skin, thereby causing a possible irritation.

In reply to such demands, as a method for improving the above-mentioned properties (in particular, the water-retention capacity and the water-absorption capacity under load) while giving consideration to safety, for example, there has been suggested a method of increasing a crosslinking density on a surface vicinity of the water-absorbent resin, according to a method including the step of mixing with an oxetane compound and a water-soluble additive (see Patent Publications 1, 2 and 5), a method including the steps of mixing with a ketal compound or an acetal compound and heat-treating the mixture (see Patent Publication 3), a method including the steps of mixing with a specified oxazoline compound and treating the mixture (see Patent Publication 4), or the like. However, even with these technologies, the above-mentioned properties have not yet been satisfactory enough.

Therefore, there has been desired the development of a water-absorbent resin which is excellent in the properties such as the water-retention capacity and the water-absorption capacity under load, while giving consideration to safety, such as having a reduced water-soluble substance.

Patent Publication 1: Japanese Patent Laid-Open No. 2002-194239
Patent Publication 2: Japanese Patent Laid-Open No. 2003-313446
Patent Publication 3: Japanese Patent Laid-Open No. Hei 08-027278
Patent Publication 4: Japanese Patent Laid-Open No. 2000-197818
Patent Publication 5: EP1199327

### DISCLOSURE OF INVENTION

### PROBLEMS TO BE SOLVED BY THE INVENTION

An object of the present invention is to provide a method for producing a water-absorbent resin which can be preferably used in hygienic materials, which is excellent in properties such as the water-retention capacity and the water-absorption capacity under load, while giving consideration to safety, such as having a reduced water-soluble substance; and a water-absorbent resin obtained by the method.

The present inventors have found that a water-absorbent resin which can be preferably used in hygienic materials, which is excellent in properties such as the water-retention capacity and the water-absorption capacity under load, while giving consideration to safety, such as having a reduced water-soluble substance is obtained by evenly crosslinking a surface vicinity of the water-absorbent resin precursor in a high crosslinking density, using a specified crosslinking agent to increase a crosslinking density on a surface vicinity of the water-absorbent resin precursor.

MEANS TO SOLVE THE PROBLEMS

Specifically, the present invention relates to:

a method for producing a water-absorbent resin, characterized by adding a bisoxetane compound represented by the following general formula (1):

[Ka 1]

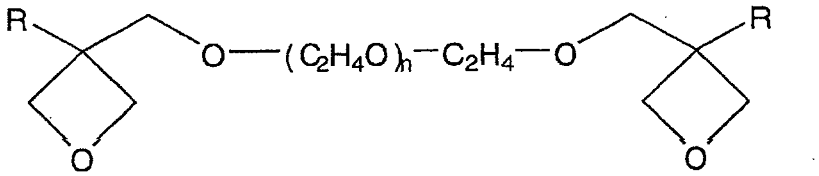

(1)

wherein R is an alkyl group having 1 to 6 carbon atoms; and n is an integer of from 0 to 6,
to a water-absorbent resin precursor obtainable by polymerizing water-soluble ethylenically unsaturated monomers, and subjecting the components to a post-crosslinking reaction while heating; wherein said water-soluble ethylenically unsaturated monomers are selected from the group comprising acrylic acid, methacrylic acid, 2-acrylamide-2-methylpropanesulfonic acid, 2-methacrylamide-2-methylpropanesulfonic acid and alkali metal salts thereof; nonionic unsaturated monomers such as acrylamide, methacrylamide, N,N-dimethylacrylamide, N,N-dimethylmethacrylamide, 2-hydroxyethylacrylate, 2-hydroxyethylmethacrylate, N-methylolacrylamide and N-methylolmethacrylamide; amino group-containing unsaturated monomers such as diethylaminoethylacrylate. diethylaminoethylmethacrylate, diethylaminopropylacrylate and diethylaminopropylmethacrylate, and quaternary compounds thereof; wherein said water-soluble ethylenically unsaturated monomers may be used alone or in combination of two or more kinds. Disclosed herein is also
a water-absorbent resin obtainable by the above method , characterized in that the water-absorbent resin has a retention capacity of physiological saline of 30 g/g or more, an absorption capacity of physiological saline under a load of 2.07 kPa of 15 ml/g or more, and a water-soluble substance of 20% by mass or less.

EFFECTS OF THE INVENTION

According to the present invention, there is provided a method for substance; and a water-absorbent resin obtained by the method.

BRIEF DESCRIPTION OF THE DRAWINGS

[Figure 1] Figure 1 is a schematic view of an apparatus for determining absorption capacity of physiological saline under load of the water-absorbent resin.

EXPLANATION OF NUMERICAL SYMBOLS

X determination apparatus

1 buret section
10 buret
11 air introduction tube
12 cock
13 cock
14 rubber plug
2 lead tube
3 measuring board
4 measuring section
40 cylinder

41 nylon mesh
42 weight
5 water-absorbent resin

## BEST MODE FOR CARRYING OUT THE INVENTION

In the present invention, a method of polymerizing a water-soluble ethylenically unsaturated monomer to obtain a water-absorbent resin precursor is not particularly limited, and includes an aqueous solution polymerization method, a reversed-phase suspension polymerization method, which are the representative polymerization methods.

In the present specification, as one example of the embodiments, the reversed-phase suspension polymerization method is explained in more detail. In the above-mentioned method, a reversed-phase suspension polymerization of a water-soluble ethylenically unsaturated monomer in a water-in-oil system is carried out, for example, using a radical polymerization initiator, in a petroleum hydrocarbon medium containing a surfactant and/or a polymeric dispersion agent, with the addition of a crosslinking agent and a chain transfer agent as occasion demands. Incidentally, in the above-mentioned reversed-phase suspension polymerization method, the water-absorbent resin precursor can be obtained by additionally adding the water-soluble ethylenically unsaturated monomer to the water-absorbent resin precursor obtained by the reversed-phase suspension polymerization and carrying out a polymerization in multi-steps of two or more steps.

The water-soluble ethylenically unsaturated monomer includes (meth)acrylic acid, 2-(meth)acrylamide-2-methylpropanesulfonic acid and alkali metal salts thereof; nonionic unsaturated monomers such as (meth)acrylamide, N,N-dimethyl(meth)acrylamide, 2-hydroxyethyl (meth)acrylate, and N-methylol(meth)acrylamide; amino group-containing unsaturated monomers such as diethylaminoethyl (meth)acrylate and diethylaminopropyl (meth)acrylate, and quaternary compounds thereof. These may be used alone or in combination of two or more kinds. Here, "(meth)acryl-" herein means "acryl-" and "methacryl-."

Among the above-mentioned water-soluble ethylenically unsaturated monomers, (meth)acrylic acid and alkali metal salts thereof, (meth)acrylamide, N,N-dimethyl(meth)acrylamide and the like are preferably used, from the viewpoint of being industrially easily available. Further, (meth)acrylic acid and alkali metal salts thereof are more preferably used, from the viewpoint of high water-absorption properties of the resulting water-absorbent resin.

The water-soluble ethylenically unsaturated monomer can be usually used in the form of an aqueous solution. It is preferably used that the concentration of the water-soluble ethylenically unsaturated monomers in the aqueous solution of the water-soluble ethylenically unsaturated monomers is from 15% by mass to a saturated concentration.

In the aqueous solution of the water-soluble ethylenically unsaturated monomer, when the water-soluble ethylenically unsaturated monomer used contains an acid group, the acid group may be neutralized with an alkaline neutralizer which comprises an alkali metal salt. It is preferably used that the degree of neutralization by the above-mentioned alkaline neutralizer is from 10 to 100% by mol of the acid group of the water-soluble ethylenically unsaturated monomer before the neutralization, from the viewpoint of increasing osmotic pressure and not causing any disadvantages in safety due to the presence of an excess alkaline neutralizer. The alkali metal salt includes lithium, sodium, and potassium. Among them, sodium and potassium are preferably used, and sodium is more preferably used.

The radical polymerization initiator includes, for example, persulfates such as potassium persulfate, ammonium persulfate, and sodium persulfate; peroxides such as methyl ethyl ketone peroxide, methyl isobutyl ketone peroxide, di-tert-butyl peroxide, tert-butyl cumyl peroxide, tert-butyl peroxyacetate, tert-butyl peroxyisobutyrate, tert-butyl peroxypivalate, and hydrogen peroxide; azo compounds such as 2,2'-azobis(2-amidinopropane)dihydrochloride, 2,2'-azobis[2-(N-phenylamidino)propane]dihydrochloride, 2,2'-azobis[2-(N-allylamidino)propane]dihydrochloride, 2,2'-azobis{2-[1-(2-hydroxyethyl)-2-imidazolin-2-yl]propane}dihydrochloride, 2,2'-azobis{2-methyl-N-[1,1-bis(hydroxymethyl)-2-hydroxyethyl]propionamide}, 2,2'-azobis[2-methyl-N-(2-hydroxyethyl)-propionamide], and 4,4'-azobis(4-cyanovaleric acid). These radical polymerization initiators may be used alone or in combination of two or more kinds. Among them, potassium persulfate, ammonium persulfate, sodium persulfate, and 2,2'-azobis(2-amidinopropane)dihydrochloride are preferably used, from the viewpoint of being industrially easily available and excellent in storage stability.

The radical polymerization initiator is usually used in each reaction step in an amount of preferably from 0.005 to 1% by mol, based on the amount of the water-soluble ethylenically unsaturated monomer used in each reaction step, from the viewpoint of shortening the time period of the polymerization reaction and preventing a rapid polymerization reaction.

The above-mentioned radical polymerization initiator can be used as a redox polymerization initiator together with a reducing agent such as sodium sulfite, sodium hydrogen sulfite, ferrous sulfite, and L-ascorbic acid.

The petroleum hydrocarbon medium includes, for example, aliphatic hydrocarbons such as n-hexane, n-heptane, n-octane, and ligroin; alicyclic hydrocarbons such as cyclopentane, methylcyclopentane, cyclohexane, and methylcyclohexane; aromatic hydrocarbons such as benzene, toluene, and xylene. Among them, n-hexane, n-heptane, and cyclohexane are preferably used, from the viewpoint of being industrially easily available, stable in quality, and inexpensive. These petroleum hydrocarbon mediums may be used alone or may be used in combination of two or more kinds.

The petroleum hydrocarbon medium is usually contained in an amount of preferably from 50 to 600 parts by mass, and more preferably from 80 to 550 parts by mass, based on the total amount of 100 parts by mass of the water-soluble ethylenically unsaturated monomer in each reaction step, from the viewpoint of removing heat of polymerization and making the polymerization temperature easier to control.

The surfactant includes, for example, polyglycerol fatty acid esters, sucrose fatty acid esters, sorbitan fatty acid esters, polyoxyethylene sorbitan fatty acid esters, polyoxyethylene glycerol fatty acid esters, sorbitol fatty acid esters, polyoxyethylene sorbitol fatty acid esters, polyoxyethylene alkyl ethers, polyoxyethylene alkylphenyl ethers, polyoxyethylene castor oil, polyoxyethylene hydrogenated castor oil, alkylallylformaldehyde condensed polyoxyethylene ethers, polyoxyethylene polyoxypropylene block copolymer, polyoxyethylene polyoxypropyl alkyl ethers, polyethylene glycol fatty acid esters, polyoxyethylene alkylamines, phosphoric esters of polyoxyethylene alkyl ethers, and phosphoric esters of polyoxyethylene alkylallyl ethers. Among them, sorbitan fatty acid esters, polyglycerol fatty acid esters and sucrose fatty acid esters are preferably used. These surfactants may be used alone or in combination of two or more kinds.

The polymeric dispersion agent includes, for example, maleic anhydride-modified polyethylene, maleic anhydride-modified polypropylene, maleic anhydride-modified ethylene-propylene copolymer, maleic anhydride-modified EPDM (ethylene-propylene-diene terpolymer), maleic anhydride-modified polybutadiene, ethylene-maleic anhydride copolymer, ethylene-propylene-maleic anhydride copolymer, butadiene-maleic anhydride copolymer, oxidized polyethylene, ethylene-acrylic acid copolymer, ethyl cellulose, ethyl hydroxyethyl cellulose. Among them, maleic anhydride-modified polyethylene, maleic anhydride-modified polypropylene, maleic anhydride-modified ethylene-propylene copolymer, oxidized polyethylene and ethylene-acrylic acid copolymer are preferably used, from the viewpoint of dispersion stability of the aqueous solution of the monomer. These polymeric dispersion agents may be used alone or in combination of two or more kinds.

Each of the surfactant and/or the polymeric dispersion agent is used in an amount of preferably from 0.1 to 5 parts by mass, and more preferably from 0.2 to 3 parts by mass, based on the amount of 100 parts by mass of the aqueous solution of the water-soluble ethylenically unsaturated monomer used in each reaction step, in order to keep an excellent dispersion state of the aqueous solution of the monomer in the petroleum hydrocarbon medium, and to obtain a dispersion stability accounting to the amount used.

In the present invention, the polymerization reaction can be carried by adding, as an internal crosslinking agent, a compound having a plurality of polymerizable unsaturated groups, to the water-soluble ethylenically unsaturated monomer. The internal crosslinking agent mentioned above includes, for example, unsaturated (poly)esters obtained by reacting polyols such as diols and triols, such as (poly)ethylene glycol [The term "(poly)" means cases where the prefix "poly" is included and where the prefix is not included. In other words, "(poly)" means a polymer compound and a monomer compound. Hereinafter referred to the same], (poly)propylene glycol, 1,4-butanediol, trimethylolpropane, polyoxyethylene glycol, polyoxypropylene glycol, or (poly)glycerol with an unsaturated acid such as (meth)acrylic acid, maleic acid or fumaric acid; bisacrylamides such as N,N'-methylenebisacrylamide; di- or tri(meth)acrylate esters obtained by reacting a polyepoxide with (meth)acrylic acid; carbamyl esters of di(meth)acrylic acid obtained by reacting a polyisocyanate such as tolylene diisocyanate or hexamethylene diisocyanate with hydroxyethyl (meth)acrylate; allylated starch, allylated cellulose, diallyl phthalate, N,N',N"-triallyl isocyanurate, divinylbenzene.

In addition, as the other internal crosslinking agents, a compound having a reactive functional group capable of reacting with a carboxyl group can be used. The compound having a reactive functional group capable of reacting with a carboxyl group includes, for example, hydroxyalkyl (meth)acrylates such as hydroxymethyl (meth)acrylate and hydroxyethyl (meth)acrylate; N-hydroxyalkyl(meth)acrylamides such as N-hydroxymethyl(meth)acrylamide and N-hydroxyethyl(meth)acrylamide.

These internal crosslinking agents may be used in combination of two or more kinds.

The internal crosslinking agent is used in an amount of preferably 1% by mol or less, and more preferably 0.5% by mol or less, based on the amount of the water-soluble ethylenically unsaturated monomer used in each reaction step, from the viewpoint of appropriately crosslinking the resulting water-absorbent resin, thereby suppressing the water solubility of the water-absorbent resin and sufficiently enhancing water-absorption capacity of the resulting resin.

In addition, in order to control water-absorption properties of the water-absorbent resin, a chain transfer agent may be added. As the above-mentioned chain transfer agent, hypophosphites, phosphites, thiols, secondary alcohols, amines can be exemplified.

The reaction temperature upon the polymerization reaction differs depending upon the radical polymerization initiator used. The reaction temperature is preferably from 20° to 110°C and more preferably from 40° to 90°C, from the viewpoint of rapid progress of the polymerization and shortening the polymerization time, thereby increasing productivity and easily removing heat of polymerization, to smoothly carry out the reaction. The reaction time is usually from 0.1 to 4 hours.

Water and the petroleum hydrocarbon medium may be removed from the mixture after the polymerization reaction, for example, by heating the mixture at a temperature of from 80° to 200°C.

As described above, the reversed-phase suspension polymerization is carried out, to give a water-absorbent

resin precursor.

The present invention is characterized by adding a bisoxetane compound as a post-crosslinking agent represented by the following general formula (1):

[Ka 2]

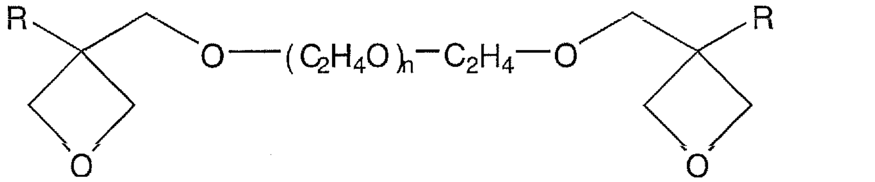

(1)

to the above-mentioned water-absorbent resin precursor, and subjecting the components to a post-crosslinking reaction while heating.

In the formula (1), R is an alkyl group having 1 to 6 carbon atoms. The alkyl group having 1 to 6 carbon atoms includes, for example, methyl group, ethyl group, n-propyl group, isopropyl group, n-butyl group, t-butyl group, n-pentyl group, n-hexyl group.

In the formula (1), n is an integer of from 0 to 6.

Specific examples of the bisoxetane compound represented by the formula (1) includes, for example, 1,6-bis(3-methyloxetane-3-yl)-2,5-dioxahexane, 1,6-bis(3-ethyloxetane-3-yl)-2,5-dioxahexane, 1,6-bis(3-n-propyloxetane-3-yl)-2,5-dioxahexane, 1,6-bis(3-isopropyloxetane-3-yl)-2,5-dioxahexane, 1,6-bis(3-n-butyloxetane-3-yl)-2,5-dioxahexane, 1,9-bis(3-methyloxetane-3-yl)-2,5,8-trioxanonane, 1,9-bis(3-ethyloxetane-3-yl)-2,5,8-trioxanonane, 1,9-bis(3-n-propyloxetane-3-yl)-2,5,8-trioxanonane, 1,9-bis(3-isopropyloxetane-3-yl)-2,5,8-trioxanonane, 1,9-bis(3-n-butyloxetane-3-yl)-2,5,8-trioxanonane, 1,12-bis(3-methyloxetane-3-yl)-2,5,8,11-tetraoxadodecane, 1,12-bis(3-ethyloxetane-3-yl)-2,5,8,11-tetraoxadodecane, 1,12-bis(3-n-propyloxetane-3-yl)-2,5,8,11-tetraoxadodecane, 1,12-bis(3-isopropyloxetane-3-yl)-2,5,8,11-tetraoxadodecane, 1,12-bis(3-n-butyloxetane-3-yl)-2,5,8,11-tetraoxadodecane, 1,15-bis(3-methyloxetane-3-yl)-2,5,8,11,14-pentaoxapentadecane, 1,15-bis(3-ethyloxetane-3-yl)-2,5,8,11,14-pentaoxapentadecane, 1,15-bis(3-n-propyloxetane-3-yl)-2,5,8,11,14-pentaoxapentadecane, 1,15-bis(3-isopropyloxetane-3-yl)-2,5,8,11,14-pentaoxapentadecane, 1,15-bis(3-n-butyloxetane-3-yl)-2,5,8,11,14-pentaoxapentadecane, 1,18-bis(3-methyloxetane-3-yl)-2,5,8,11,14,17-hexaoxaoctadecane, 1,18-bis(3-ethyloxetane-3-yl)-2,5,8,11,14,17-hexaoxaoctadecane, 1,18-bis(3-n-propyloxetane-3-yl)-2,5,8,11,14,17-hexaoxaoctadecane, 1,18-bis(3-isopropyloxetane-3-yl)-2,5,8,11,14,17-hexaoxaoctadecane, 1,18-bis(3-n-butyloxetane-3-yl)-2,5,8,11,14,17-hexaoxaoctadecane, and the like. Among them, 1,6-bis(3-methyloxetane-3-yl)-2,5-dioxahexane, 1,6-bis(3-ethyloxetane-3-yl)-2,5-dioxahexane, 1,9-bis(3-methyloxetane-3-yl)-2,5,8-trioxanonane, 1,9-bis(3-ethyloxetane-3-yl)-2,5,8-trioxanonane, 1,12-bis(3-methyloxetane-3-yl)-2,5,8,11-tetraoxadodecane, and 1,12-bis(3-ethyloxetane-3-yl)-2,5,8,11-tetraoxadodecane are preferably used. These bisoxetane compounds may be used alone or in combination of two or more kinds.

The bisoxetane compound represented by the formula (1) can be prepared by, for example, a method of reacting a sulfonic acid ester of 3-alkyl-3-hydroxymethyloxetane and a diol compound in the presence of a base (Japanese Patent Laid-Open No. 2000-302774, and Japanese Patent Laid-Open No. 2000-319577), a method of reacting 3-alkyl-3-hydroxymethyloxetane and an $\alpha,\omega$-dihaloalkane in the presence of an alkaline solution using a phase-transfer catalyst (Pure Appl. Chem., A30 (2&3), pp.189 (1993); and Bull. Chem. Soc. Jpn., 61 1653-1659 (1988)).

The amount of the bisoxetane compound used cannot be absolutely determined since the amount varies with the kind of the compound used. The bisoxetane compound is usually used in an amount of preferably from 0.001 to 3% by mol, more preferably from 0.01 to 2% by mol, and still more preferably from 0.1 to 1% by mol, based on the total amount of the water-soluble ethylenically unsaturated monomer used to obtain the water-absorbent resin precursor, from the viewpoint of sufficiently increasing the crosslinking density in a surface vicinity of the water-absorbent resin thereby enhancing the properties such as the water-absorption capacity under load, and from the viewpoint of preventing excess crosslinking reactions thereby enhancing the water-retention capacity.

In the present invention, it is possible to mix a known crosslinking agent in addition to the above-mentioned bisoxetane compound during the post-crosslinking reaction. The post-crosslinking agent including the bisoxetane compound is preferably used by dissolving in a solvent. The type of solvent includes water; alcohols such as methyl alcohol, ethyl alcohol, propyl alcohol, and isopropyl alcohol; ketones such as acetone, and methyl ethyl ketone. These solvents may be used alone or in combination of two or more kinds. Among them, water and alcohols are preferably used.

The above-mentioned solvent is used in an amount of preferably from 1 to 50 parts by mass, more preferably from 1 to 40 parts by mass, and still more preferably from 5 to 40 parts by mass, based on 100 parts by mass of the

water-absorbent resin precursor.

The timing for adding the post-crosslinking agent including the bisoxetane compound is not particularly limited, as long as the timing is after the water-absorbent resin precursor is obtained by polymerizing the water-soluble ethylenically unsaturated monomer. For example, a method including the step of adding the post-crosslinking agent to a water-containing gel of the water-absorbent resin precursor after polymerization, a method including the steps of adjusting water in the the water-absorbent resin precursor by dehydrating and drying a water-containing gel after polymerization, and thereafter adding the post-crosslinking agent thereto, a method including the step of adding the post-crosslinking agent to the water-absorbent resin precursor obtained by dehydrating and drying a water-containing gel after polymerization, together with an appropriate amount of water (here, the water-absorbent resin precursor may be used in a state of dispersing in a petroleum hydrocarbon medium, as occasion demands) are included. The post-crosslinking agent is added to the water-absorbent resin precursor, and thereafter, for example, the post-crosslinking reaction is carried out while distilling off water and/or a petroleum hydrocarbon medium by heating, whereby the water-absorbent resin of the present invention can be obtained.

The water content of the water-absorbent resin precursor immediately prior to adding the post-crosslinking agent is preferably 65% by mass or less, more preferably from 1 to 50% by mass or less, still more preferably from 5 to 50% by mass or less, and still more preferably from 5 to 33% by mass or less. Here, in the present invention, the "water content" is the value determined by the determination method described below.

By adding a post-crosslinking agent including the bisoxetane compound to the water-absorbent resin precursor, mixing them and thereafter heating, a surface vicinity of the water-absorbent resin precursor can be crosslinked. The temperature for the above-mentioned heating is preferably from 50° to 200°C, and more preferably from 80° to 180°C, from the viewpoint of rapidly and evenly crosslinking a surface vicinity of the water-absorbent resin thereby enhancing the properties such as the water-retention capacity and the water-absorption capacity under load, and from the viewpoint of preventing decomposition or degradation of the water-absorbent resin. In addition, the reaction time is preferably 0.1 to 5 hours, and preferably 0.5 to 4 hours.

Also, it is preferably used to add a reaction aid in order to keep the reaction temperature low and shortening the reaction time during the post-crosslinking reaction. As the reaction aid, proton acid and Lewis acid are preferably used. For example, inorganic acids such as sulfuric acid, phosphoric acid and hydrochloric acid; organic acids such as citric acid, glyoxylic acid, glycolic acid, glutaric acid, cinnamic acid, succinic acid, and lactic acid are preferably used. Among them, phosphoric acid and lactic acid are more preferably used.

The amount of the reaction aid used cannot be absolutely determined since the amount varies with the kind of the compound used, reaction conditions. The reaction aid is desirably 0.0001 to 5-fold the amount of the bisoxetane compound on the molar basis.

An additive such as a lubricant, a deodorizing agent or an antimicrobial agent may be further added to the water-absorbent resin of the present invention depending upon its purpose.

The water-absorbent resin obtained by the production method of the present invention has a retention capacity of physiological saline of 30 g/g or more, an absorption capacity of physiological saline under a load of 2.07 kPa of 15 mL/g or more, and has a water-soluble substance of 20% by mass or less. Since the water-absorbent resin obtained by the method of the present invention is excellent in properties such as water-retention capacity, and water-absorption capacity under load, and also gives consideration to safety of the water-absorbent resin by reducing water-soluble substance, the water-absorbent resin can be preferably used in hygienic materials.

Here, retention capacity of physiological saline, absorption capacity of physiological saline under load of 2.07 kPa, and water-soluble substance are the values determined according to the determination method described as set forth below.

The water-absorbent resin of the present invention has a retention capacity of physiological saline of preferably 30 g/g or more, more preferably 35 g/g or more, even more preferably 40 g/g or more, and even more preferably from 40 to 70 g/g, from the viewpoint of, upon being used in a hygienic material, increasing absorption capacity and lowering the amount of re-wet of liquid.

In addition, the water-absorbent resin of the present invention has an absorption capacity of physiological saline under a load of 2.07 kPa of preferably 15 mL/g or more, more preferably 17 mL/g or more, even more preferably 20 mL/g or more, and even more preferably from 20 to 45 mL/g, from the viewpoint of, upon being used as a hygienic material, lowering the amount of re-wet of liquid in a case where pressure is applied to the hygienic material after liquid absorption.

The water-absorbent resin of the present invention has a water-soluble substance of preferably 20% by mass or less, more preferably 18% by mass or less, and even more preferably 16% by mass or less, from the viewpoint of, upon being used in a hygienic material, preventing adhesion of the slimy liquid to the skin.

As above-mentioned, a water-absorbent resin precursor is obtained by polymerizing a water-soluble ethylenically unsaturated monomer, and thereafter, a bisoxetane compound is added thereto as a crosslinking agent, to carry out a post-crosslinking reaction, whereby a water-absorbent resin which is excellent in properties such as water-retention

capacity, and water-absorption capacity under load, while giving consideration to safety for the human body by reducing water-soluble substance, can be obtained.

The reason why the water-absorbent resin having excellent properties and reduced water-soluble substance as above-mentioned can be obtained is not clear. Although not wanting to be limited by theory, the reason can be presumed as follows. Briefly, it is considered that the reason is due to the fact that, a water-absorbent resin precursor is reacted in the presence of a bisoxetane compound as a post-crosslinking agent, whereby a reaction of a carboxyl group and an oxetane group in the water-absorbent resin proceeds in an appropriate rate, so that a surface vicinity of the water-absorbent resin can be evenly crosslinked in a high crosslinking density. In particular, it is considered that the bisoxetane compound described herein has a glycol chain in its molecule thereby being excellent in water solubility, so that the compound is excellent in an even dispersion upon being added to the water-absorbent resin precursor, or in compatibility with the precursor, thereby making it possible to crosslink the surface vicinity more evenly.

The present invention will be further specifically described hereinbelow by means of Synthesis Examples, Production Examples, Examples and Comparative Examples, without intending to limit the scope of the present invention to these Synthesis Examples, Production Examples and Examples.

The evaluations of the water-absorbent resin obtained in each of Examples and Comparative Examples were made in accordance with the following procedures.

(1) Retention Capacity of Physiological Saline

The amount 2.0 g of water-absorbent resin were weighed in a cotton bag (Cottonbroad No. 60, width 100 mm x length 200 mm), and placed in a 500 ml-beaker. Physiological saline (0.9% by mass aqueous solution of sodium chloride, hereinafter referred to the same) was poured into the cotton bag in an amount of 500 g at one time, and the physiological saline was dispersed so as not to generate an unswollen lump of the water-absorbent resin. The upper part of the cotton bag was tied up with a rubber band, and the cotton bag was allowed to stand for 1 hour, to sufficiently swell the water-absorbent resin. The cotton bag was dehydrated for 1 minute with a dehydrator (manufactured by Kokusan Enshinki Co., Ltd., product number: H-122) set to have a centrifugal force of 167G. The mass Wa (g) of the cotton bag containing swollen gels after the dehydration was determined. The same procedures were carried out without adding water-absorbent resin, and the empty mass Wb (g) of the cotton bag upon wetting was determined. The water-retention capacity was calculated from the following formula.

$$\text{Retention Capacity of Physiological Saline (g/g)} = [\text{Wa} - \text{Wb}]\ (\text{g})/\text{Mass of Water-Absorbent Resin (g)}$$

(2) Absorption Capacity of Physiological Saline Under Load of 2.07 kPa

The absorption capacity of physiological saline of water-absorbent resin under load of 2.07 kPa was determined using an apparatus X of which outline constitution was shown in Figure 1.

The apparatus X shown in Figure 1 comprises a buret section 1, a lead tube 2, a measuring board 3, and a measuring section 4 placed on the measuring board 3. To the buret section 1 are connected a rubber plug 14 on the top of a buret 10, and an air introduction tube 11 and a cock 12 at the bottom portion of the buret 10, and further, the air introduction tube 11 has a cock 13 at the end. The lead tube 2 is attached between the buret section 1 and the measuring board 3. The lead tube 2 has an inner diameter of 6 mm. A hole of a diameter of 2 mm is made at the central section of the measuring board 3, and the lead tube 2 is connected thereto. The measuring section 4 has a cylinder 40, a nylon mesh 41 adhered to the bottom part of the cylinder 40, and a weight 42. The cylinder 40 has an inner diameter of 2.0 cm. The nylon mesh 41 has an opening of 200 mesh (75 $\mu$m), and is configured so as a predetermined amount of the water-absorbent resin 5 to be evenly spread over the nylon mesh 41. The weight 42 has a diameter of 1.9 cm and a mass of 59.8 g. This weight 42 is placed on the water-absorbent resin 5, so that a 2.07 kPa load can be applied to the water-absorbent resin 5.

In the apparatus X having the configuration above-mentioned, first, the cock 12 and the cock 13 at the buret section 1 are closed, and a physiological saline adjusted to 25°C is poured from the top of the buret 10 and the top of the buret is plugged with the rubber plug 14. Thereafter, the cock 12 and the cock 13 at the buret section 1 are opened. Next, the height of the measuring board 3 is adjusted so that the end of the lead tube 2 in the central section of the measuring board 3 and an air introduction port of the air introduction tube 11 are at the same height.

On the other hand, 0.10 g of the water-absorbent resin 5 is evenly spread over the nylon mesh 41 in the cylinder 40, and the weight 42 is placed on the water-absorbent resin 5. The measuring section 4 is placed so that its central section is in alignment with a lead tube port in the central section of the measuring board 3.

The volume reduction of the physiological saline in the buret 10, i.e., the volume of the physiological saline absorbed by the water-absorbent resin 5, Wc (ml), is continuously read off, from a time point where the water-absorbent resin 5 started absorbing water. The absorption capacity of physiological saline under load of the water-absorbent resin 5 after 60 minutes passed from a time point of starting water absorption was obtained by the following formula.

$$\text{Absorption Capacity of Physiological Saline Under Load (ml/g)} = \text{Wc (ml)}/0.10\ \text{(g)}$$

(3) Water-Soluble Substance

The amount 500±0.1 g of physiological saline was weighed out in a 500 ml-beaker. A magnetic stirrer bar (8 mm ϕ x 30 mm, ringless) was placed therein, and the beaker was placed on a magnetic stirrer (HS-30D, manufactured by iuchi). Subsequently, the magnetic stirrer bar was adjusted so as to rotate at a rate of 600 r/min. In addition, a bottom of a vortex generated by rotation of the magnetic stirrer bar was adjusted so as to be near an upper portion of the magnetic stirrer bar.

Next, 2.0±0.002 g of water-absorbent resin was quickly poured between the center of vortex in the beaker and the side of the beaker and dispersed therein, and the mixture was stirred for 3 hours. The aqueous dispersion of the water-absorbent resin after stirring for 3 hours was filtered with a standard sieve (opening of sieve: 75 μm), and the resulting filtrate was further subjected to suction filtration using a Kiriyama type funnel (Filter Paper No. 6).

The amount 80 ± 0.0005 g of the resulting filtrate was weighed out in a 100 ml-beaker adjusted to a constant weight. The filtrate was dried with a forced convection oven (FV-320, manufactured by ADVANTEC) set at an internal temperature of 140°C until a constant weight was attained, and a mass Wd (g) of the solid content of the filtrate was determined.

On the other hand, the same procedures as the above were carried out without using the water-absorbent resin, and a filtrate solid mass We (g) was determined. The water-soluble substance was calculated from the following formula.

$$\text{Water-Soluble Substance (\% by mass)} = [[(\text{Wd} - \text{We}) \times (500/80)]/2 \times 100$$

(4) Average Particle Diameter

JIS standard sieves, a sieve having an opening of 850 μm, a sieve having an opening of 600 μm, a sieve having an opening of 425 μm, a sieve having an opening of 300 μm, a sieve having an opening of 150 μm, a sieve having an opening of 75 μm, and a receiving tray were combined in order from the top. About 100 g of the water-absorbent resin was placed on an uppermost sieve, and shaken for 20 minutes with a rotating and tapping shaker machine.

Next, the relationships between the opening of the sieve and an integral of a mass percentage remaining on the sieve were plotted on a logarithmic probability paper by calculating the mass of the water-absorbent resin particles remaining on each sieve as a mass percentage to an entire amount, and accumulating the mass percentages in order, starting from those having smaller particle diameters. A particle diameter corresponding to a 50% cumulative mass percentage is defined as an average particle diameter by joining the plots on the probability paper in a straight line.

(5) Drying Loss (Water Content) of Water-absorbent Resin and Water-absorbent Resin Precursor

The amount 2.0 g of the water-absorbent resin (water-absorbent resin precursor) was precisely weighed out (Wg (g)) in an aluminum foil case (No. 8) of which constant weight (Wf (g)) was previously attained. The above sample was dried for 2 hours with a forced convection oven (manufactured by ADVANTEC) set at an internal temperature of 105°C. Thereafter, the dried sample was allowed to be cooled in a desiccator, and a mass Wh (g) after drying was determined. The drying loss (water content) of the water-absorbent resin (water-absorbent resin precursor) was calculated from the following formula.

$$\text{Drying Loss (Water Content) (\% by Mass)} = [(Wg - Wf) - (Wh - Wf)]/(Wg - Wf) \times 100$$

[Synthesis Example 1 of Crosslinking Agent] (synthesis of 1,6-bis(3-ethyloxetane-3-yl)-2,5-dioxahexane) (compound wherein R = ethyl group and n = 0 in the formula (1))

A 1-liter four-neck flask equipped with a thermometer, a stirrer, a reflux condenser, a dropping funnel and a nitrogen gas inlet tube was charged with 44.1 g (0.38 mol) of 3-ethyl-3-hydroxymethyloxetane, 44.6 g (0.44 mol) of triethylamine and 220 g of toluene. The contents were externally cooled in an ice-water bath until the internal temperature was 5°C under a nitrogen gas atmosphere. Next, 45.8 g (0.4 mol) of methanesulfonyl chloride was added dropwise so as the internal temperature not to exceed 10°C. Thereafter, the temperature was allowed to return to room temperature, and the contents were further stirred for 2 hours. After the reaction, the resultant triethylamine hydrochloride was filtered off, and washed with a small amount of toluene, to give a reaction filtrate.

The above reaction filtrate was returned to the flask, and 6.4 g (0.02 mol) of tetra-n-butylammonium bromide as a catalyst and 13.7 g (0.22 mol) of ethylene glycol were added thereto. The contents were heated to the internal temperature of 60°C, and thereafter 12 g (0.3 mol) of sodium hydroxide in a pellet form was added under stirring over a period of 1 hour. Subsequently, the contents were reacted at the same temperature for 2 hours, and the internal temperature was then raised to 70°C and the reaction was allowed to proceed for 5 hours. After the reaction, 60 g of ion-exchange water was added in order to dissolve the resultant salt and to remove an excess amount of alkali, followed by cooling the flask. The reaction solution was transferred to a separatory funnel to allow phase separation, and the resulting organic layer was distilled in a reduced-distillation apparatus at an oil bath temperature of 140°C and a reduced pressure degree of 3 mmHg, to give 34.1 g of a target 1,6-bis(3-ethyloxetane-3-yl)-2,5-dioxahexane (0.13 mol, yield:68%, purity 86%). Here, the purity was determined from the peak area ratio in the chart obtained from gas chromatography.

[Synthesis Example 2 of Crosslinking Agent] (synthesis of 1,12-bis(3-ethyloxetane-3-yl)-2,5,8,11-tetraoxadodecane) (compound wherein R = ethyl group and n = 2 in the formula (1))

A 2-liter four-neck flask equipped with a thermometer, a stirrer, a reflux condenser, a dropping funnel and a nitrogen gas inlet tube was charged with 672 g (8.4 mol) of 50% by mass aqueous solution of sodium hydroxide, 25.5 g (0.075 mol) of tetra-n-butylammonium hydrogensulfate, and 330 g of n-hexane. The contents were heated in an oil bath until the internal temperature was 65°C under a nitrogen gas atmosphere. Next, 58.1 g (0.5 mol) of 3-ethyl-3-hydroxymethyloxetane was added dropwise, and stirred at the same temperature for 30 minutes. Next, 93.5 g (0.5 mol) of 1,2-bis(2-chloroethoxy)ethane was added dropwise at the same temperature over 1 hour, and thereafter the reaction was allowed to proceed for another 8 hours. After the reaction, and 450 g of ion-exchange water was added in order to dissolve the resultant salt and to remove an excess amount of alkali, followed by cooling the flask. The reaction solution was transferred to a separatory funnel to allow phase separation, and the resulting organic layer was distilled in a reduced-distillation apparatus at an oil bath temperature of 250°C and a reduced pressure degree of 3 mmHg, to give 38.1 g of a target 1,12-bis(3-ethyloxetane-3-yl)-2,5,8,11-tetraoxadodecane (0.11 mol, yield:22%, purity 94%). Here, the purity was determined from the peak area ratio in the chart obtained from gas chromatography.

Production Example 1

A cylindrical round bottomed separable flask having an internal diameter of 110 mm, equipped with a reflux condenser, a dropping funnel, a nitrogen gas inlet tube and a stirring blade was prepared. This flask was charged with 340 g of n-heptane, and 0.92 g of a sucrose stearate having an HLB of 3 (manufactured by Mitsubishi-Kagaku Foods Corporation, Ryoto sugar ester S-370) and 0.92 g of a maleic anhydride-modified ethylene-propylene copolymer (manufactured by Mitsui Chemicals, Inc., Hi-wax 1105A) were added thereto. The temperature was raised to 80°C while stirring, to dissolve the surfactant, and thereafter the solution was cooled to 50°C.

On the other hand, a 500 ml-Erlenmeyer flask was charged with 92 g (1.02 mol) of an 80% by mass aqueous solution of acrylic acid, and 146.0 g of a 21% by mass aqueous sodium hydroxide was added dropwise thereto with cooling from external to neutralize 75% by mol. Thereafter, 0.11 g (0.41 mmol) of potassium persulfate and 9.2 mg (0.06 mmol) of N,N'-methylenebisacrylamide were added thereto to dissolve, to prepare an aqueous monomer solution for the first step.

The entire amount of this aqueous monomer solution for the first step was added to the above separable flask, and the internal of the system was sufficiently replaced with nitrogen. Thereafter, the flask was immersed in a water bath at 70°C to raise the temperature, and the first-step polymerization was carried out for 1 hour and then cooled to a room temperature, to give a polymerization slurry of the first step.

On the other hand, an another 500 ml-Erlenmeyer flask was charged with 128.8 g (1.43 mol) of an 80% by

mass aqueous solution of acrylic acid, and 159.0 g of a 27% by mass aqueous sodium hydroxide was added dropwise thereto with cooling from external to neutralize 75% by mol. Thereafter, 0.16 g (0.59 mmol) of potassium persulfate and 12.9 mg (0.08 mmol) of N,N'-methylenebisacrylamide were added thereto to dissolve, to prepare an aqueous monomer solution for the second step.

The entire amount of this aqueous monomer solution for the second step was added to the above slurry after polymerization, and the internal of the system was sufficiently replaced with nitrogen. Thereafter, the flask was again immersed in a water bath at 70°C to raise the temperature, and the second-step polymerization was carried out.

After the second-step polymerization, the reaction mixture was heated with an oil bath at 125°C, whereby only water was removed from the azeotropic mixture of n-heptane and water. Further, n-heptane in the internal of the system was removed by distillation, to give 237.5 g of the water-absorbent resin precursor (A1), which is an aggregate of spherical particles and has an average particle size of 359μm. The water-absorbent resin precursor at this point had a drying loss (water content) of 7.1% by mass.

Example 1

A cylindrical round bottomed separable flask having an internal diameter of 110 mm, equipped with a stirrer, a stirring blade, a reflux condenser, a dropping funnel and a nitrogen gas inlet tube, was charged with 50 g of the water-absorbent resin precursor obtained in Production Example 1 (A1) (Theoretical amount of the water-soluble ethylenically unsaturated monomer used to obtain the precursor: 0.52 mol) and 80 g of n-heptane. The internal temperature was raised to 80°C. Thereafter, 8.0 g of water was added thereto, and the mixture was kept at the same temperature for 10 minutes (the water content of the water-absorbent resin precursor: 19.9% by mass).

Thereafter, 5.0 g of a 10% by mass aqueous solution of 1,6-bis(3-ethyloxetane-3-yl)-2,5-dioxahexane (1.9 mmol), obtained by Synthesis Example 1, was added thereto as a post-crosslinking agent, and mixed. This mixture was heated using an oil bath at 175°C, and water and n-heptane of the resulting mixture were removed by distillation. The post-crosslinking reaction was carried out for 2 hours while drying, to give the water-absorbent resin. The drying loss (water content) was 2.3% by mass. The physical properties of the water-absorbent resin were determined by the methods described above and the results were shown in Table 1.

Example 2

A cylindrical round bottomed separable flask having an internal diameter of 110 mm, equipped with a stirrer, a stirring blade, a reflux condenser, a dropping funnel and a nitrogen gas inlet tube, was charged with 50 g of the water-absorbent resin precursor obtained in Production Example 1 (A1) (Theoretical amount of the water-soluble ethylenically unsaturated monomer used to obtain the precursor: 0.52 mol) and 80 g of n-heptane. The internal temperature was raised to 80°C. Thereafter, 8.0 g of water was added thereto, and the mixture was kept at the same temperature for 10 minutes (the water content of the water-absorbent resin precursor: 19.9% by mass).

Thereafter, 5.0 g of a 10% by mass aqueous solution of 1,12-bis(3-ethyloxetane-3-yl)-2,5,8,11-tetraoxadodecane (1.4 mmol), obtained by Synthesis Example 2, was added thereto as a post-crosslinking agent, and mixed. This mixture was heated using an oil bath at 175°C, and water and n-heptane of the resulting mixture were removed by distillation. The post-crosslinking reaction was carried out for 3 hours while drying, to give the water-absorbent resin. The drying loss (water content) was 2.1% by mass. The physical properties of the water-absorbent resin were determined by the methods described above and the results were shown in Table 1.

Example 3

A cylindrical round bottomed separable flask having an internal diameter of 110 mm, equipped with a stirrer, a stirring blade, a reflux condenser, a dropping funnel and a nitrogen gas inlet tube, was charged with 50 g of the water-absorbent resin precursor obtained in Production Example 1 (A1) (Theoretical amount of the water-soluble ethylenically unsaturated monomer used to obtain the precursor: 0.52 mol) and 80 g of n-heptane. The internal temperature was raised to 80°C. Thereafter, 3.5 g of water was added thereto, and the mixture was kept at the same temperature for 10 minutes (the water content of the water-absorbent resin precursor: 13.2% by mass).

Thereafter, 5.0 g of a 10% by mass aqueous solution of 1,6-bis(3-ethyloxetane-3-yl)-2,5-dioxahexane (1.9 mmol), obtained by Synthesis Example 1, was added thereto as a post-crosslinking agent, and 5.0 g of a 10% by mass aqueous solution of a phosphoric acid (5.1 mmol) as a reaction aid were added thereto and mixed. This mixture was heated using an oil bath at 175°C, and water and n-heptane of the resulting mixture were removed by distillation. The post-crosslinking reaction was carried out for 1 hour while drying, to give the water-absorbent resin. The drying loss (water content) was 3.4% by mass. The physical properties of the water-absorbent resin were determined by the methods described above and the results were shown in Table 1.

Example 4

A cylindrical round bottomed separable flask having an internal diameter of 110 mm, equipped with a stirrer, a stirring blade, a reflux condenser, a dropping funnel and a nitrogen gas inlet tube, was charged with 50 g of water-absorbent resin precursor obtained in Production Example 1 (A1) (Theoretical amount of the water-soluble ethylenically unsaturated monomer used to obtain the precursor: 0.52 mol) and 80 g of n-heptane. The internal temperature was raised to 80°C. Thereafter, 3.5 g of water was added thereto, and the mixture was kept at the same temperature for 10 minutes (the water content of the water-absorbent resin precursor: 13.2% by mass).

Thereafter, 5.0 g of a 10% by mass aqueous solution of 1,12-bis(3-ethyloxetane-3-yl)-2,5,8,11-tetraoxadodecane (1.4 mmol), obtained by Synthesis Example 2, as a post-crosslinking agent, and 5.0 g of a 10% by mass aqueous solution of a phosphoric acid (5.1 mmol) as a reaction aid were added thereto and mixed. This mixture was heated using an oil bath at 175°C, and water and n-heptane of the resulting mixture were removed by distillation. The post-crosslinking reaction was carried out for 1 hour while drying, to give the water-absorbent resin. The drying loss (water content) was 3.4% by mass. The physical properties of the water-absorbent resin were determined by the methods described above and the results were shown in Table 1.

Example 5

A cylindrical round bottomed separable flask having an internal diameter of 110 mm, equipped with a reflux condenser, a dropping funnel, a nitrogen gas inlet tube and a stirring blade was prepared. This flask was charged with 340 g of n-heptane, and 0.92 g of a sucrose stearate having an HLB of 3 (manufactured by Mitsubishi-Kagaku Foods Corporation, Ryoto sugar ester S-370) and 0.92 g of a maleic anhydride-modified ethylene-propylene copolymer (manufactured by Mitsui Chemicals, Inc., Hi-wax 1105A) were added thereto. The temperature was raised to 80°C while stirring, to dissolve the surfactant, and thereafter the solution was cooled to 50°C.

On the other hand, a 500 ml-Erlenmeyer flask was charged with 92 g (1.02 mol) of an 80% by mass aqueous solution of acrylic acid, and 146.0 g of a 21% by mass aqueous sodium hydroxide was added dropwise thereto with cooling from external to neutralize 75% by mol. Thereafter, 0.11 g (0.41 mmol) of potassium persulfate as a radical polymerization initiator and 9.2 mg (0.06 mmol) of N,N'-methylenebisacrylamide as an internal-crosslinking agent were added thereto to dissolve, to prepare an aqueous monomer solution for the first step.

The entire amount of this aqueous monomer solution for the first step was added to the above separable flask, and the internal of the system was sufficiently replaced with nitrogen. Thereafter, the flask was immersed in a water bath at 70°C to raise the temperature, and the first-step polymerization was carried out and then cooled to a room temperature, to give a polymerization slurry of the first step.

On the other hand, an another 500 ml-Erlenmeyer flask was charged with 128.8 g (1.43 mol) of an 80% by mass aqueous solution of acrylic acid, and 159.0 g of a 27% by mass aqueous sodium hydroxide was added dropwise thereto with cooling from external to neutralize 75% by mol. Thereafter, 0.16 g (0.59 mmol) of potassium persulfate as a radical polymerization initiator and 12.9 mg (0.08 mmol) of N,N'-methylenebisacrylamide as an internal-crosslinking agent were added thereto to dissolve, to prepare an aqueous monomer solution for the second step.

The entire amount of this aqueous monomer solution for the second step was added to the above slurry after polymerization, and the internal of the system was sufficiently replaced with nitrogen. Thereafter, the flask was again immersed in a water bath at 70°C to raise the temperature, and the second-step polymerization was carried out.

After the second-step polymerization, the temperature of the reaction solution was raised in an oil bath at 125°C, and 260 g of water was removed outside the system while refluxing n-heptane by azeotropic distillation of n-heptane and water, to give 266 g of the water-absorbent resin (A2) (water content: 18.3% by mass.). To the resulting water-absorbent resin (A2) (Theoretical amount of the water-soluble ethylenically unsaturated monomer used to obtain the precursor: 2.45 mol), a 10% by mass aqueous solution of 23.8 g of a 10% by mass aqueous solution of 1,6-bis(3-ethyloxetane-3-yl)-2,5-dioxahexane (9.2 mmol), obtained by Synthesis Example 1, as a post-crosslinking agent, and 16.6 g of a 10% by mass aqueous solution of a lactic acid (18.4 mmol) as a reaction aid were added thereto. This reaction solution was heated using an oil bath at 175°C, and water and n-heptane were removed by distillation. The post-crosslinking reaction was carried out for 1 hour while drying, to give 238 g of the water-absorbent resin. The drying loss (water content) was 2.4% by mass. The physical properties of the water-absorbent resin were determined by the methods described above and the results were shown in Table 1.

Comparative Example 1

For the water-absorbent resin (A1) obtained in Production Example 1, the physical properties of the water-absorbent resin were determined by the methods described above and the results were shown in Table 1.

Comparative Example 2

A cylindrical round bottomed separable flask having an internal diameter of 110 mm, equipped with a stirrer, a stirring blade, a reflux condenser, a dropping funnel and a nitrogen gas inlet tube, was charged with 50 g of the water-absorbent resin precursor obtained in Production Example 1 (A1) (Theoretical amount of the water-soluble ethylenically unsaturated monomer used to obtain the precursor: 0.52 mol) and 80 g of n-heptane.

The internal temperature was raised to 80°C. Thereafter, 5.0 g of a 10% by mass aqueous solution of 1,4-butanediol (5.5 mmol) was added thereto as a post-crosslinking agent, and mixed. This mixture was heated using an oil bath at 175°C, and water and n-heptane of the resulting mixture were removed by distillation. The post-crosslinking reaction was carried out for 2 hours while drying, to give the water-absorbent resin. The drying loss (water content) was 2.0% by mass. The physical properties of the water-absorbent resin were determined by the methods described above and the results were shown in Table 1.

Comparative Example 3

A cylindrical round bottomed separable flask having an internal diameter of 110 mm, equipped with a stirrer, a stirring blade, a reflux condenser, a dropping funnel and a nitrogen gas inlet tube, was charged with 50 g of the water-absorbent resin precursor obtained in Production Example 1 (A1) (Theoretical amount of the water-soluble ethylenically unsaturated monomer used to obtain the precursor: 0.52 mol) and 80 g of n-heptane.

The internal temperature was raised to 80°C. Thereafter, 5.0 g of a 10% by mass aqueous solution of 3-methyl-3-oxetanemethanol (4.9 mmol) was added thereto as a post-crosslinking agent, and mixed. This mixture was heated using an oil bath at 175°C, and water and n-heptane of the resulting mixture were removed by distillation. The post-crosslinking reaction was carried out for 2 hours while drying, to give the water-absorbent resin. The drying loss (water content) was 3.2% by mass. The physical properties of the water-absorbent resin were determined by the methods described above and the results were shown in Table 1.

Comparative Example 4

A cylindrical round bottomed separable flask having an internal diameter of 110 mm, equipped with a stirrer, a stirring blade, a reflux condenser, a dropping funnel and a nitrogen gas inlet tube, was charged with 50 g of the water-absorbent resin precursor obtained in Production Example 1 (A1) (Theoretical amount of the water-soluble ethylenically unsaturated monomer used to obtain the precursor: 0.52 mol) and 80 g of n-heptane.

The internal temperature was raised to 80°C. Thereafter, 16.7 g of a 3% by mass aqueous solution of di[1-ethyl(3-oxetanyl)]methyl ether (2.3 mmol) was added thereto as a post-crosslinking agent, and mixed. This mixture was heated using an oil bath at 175°C, and water and n-heptane of the resulting mixture were removed by distillation. The post-crosslinking reaction was carried out for 2 hours while drying, to give the water-absorbent resin. The drying loss (water content) was 2.2% by mass. The physical properties of the water-absorbent resin were determined by the methods described above and the results were shown in Table 1.

[Table 1]

| | Temperature | Time | Retention Capacity of Physiological Saline | Absorption Capacity of Physiological Saline under Load of 2.07 kPa | Water-soluble Substance |
|---|---|---|---|---|---|
| | [°C] | [hr] | [g/g] | [ml/g] | [% by mass] |
| Ex. 1 | 175 | 2 | 45 | 21 | 14 |
| Ex. 2 | 175 | 3 | 46 | 20 | 16 |
| Ex. 3 | 175 | 1 | 40 | 25 | 12 |
| Ex. 4 | 175 | 1 | 44 | 21 | 15 |
| Ex. 5 | 175 | 1 | 43 | 22 | 13 |
| Comp. Ex. 1 | - | - | 66 | 6 | 27 |
| Comp. Ex. 2 | 175 | 2 | 44 | 22 | 22 |

(continued)

| | Temperature | Time | Retention Capacity of Physiological Saline | Absorption Capacity of Physiological Saline under Load of 2.07 kPa | Water-soluble Substance |
|---|---|---|---|---|---|
| Comp. Ex. 3 | 175 | 2 | 42 | 24 | 24 |
| Comp. Ex. 4 | 175 | 2 | 47 | 11 | 18 |

It can be seen from the results shown in Table 1 that the water-absorbent resin obtained in each Example has an excellent water-retention capacity and water-absorption capacity under load, and a low water-soluble substance.

INDUSTRIAL APPLICABILITY

The water-absorbent resin obtained by the method for producing a water-absorbent resin of the present invention is excellent in properties such as water-retention capacity, and water-absorption capacity under load, and also gives consideration to safety of the water-absorbent resin by reducing water-soluble substance. Therefore, the water-absorbent resin of the present invention can be preferably used, for example, in hygienic materials such as disposable diaper, incontinence pad and sanitary napkin, in particular, in disposable diaper.

## Claims

1. A method for producing a water-absorbent resin, **characterized by** adding a bisoxetane compound represented by the following general formula (1):

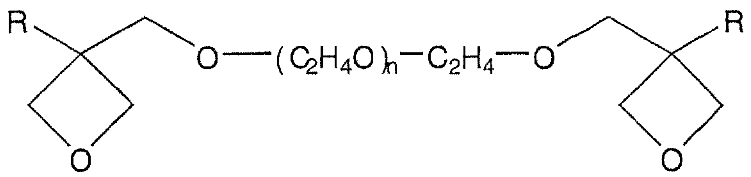

(1)

wherein R is an alkyl group having 1 to 6 carbon atoms; and n is an integer of from 0 to 6,
to a water-absorbent resin precursor obtainable by polymerizing water-soluble ethylenically unsaturated monomers, and subjecting the components to a post-crosslinking reaction while heating, wherein said water-soluble ethylenically unsaturated monomers are selected from the group comprising acrylic acid, methacrylic acid, 2-acrylamide-2-methylpropanesulfonic acid, 2-methacrylamide-2-methylpropanesulfonic acid and alkali metal salts thereof; nonionic unsaturated monomers such as acrylamide, methacrylamide, N,N-dimethylacrylamide, N,N-dimethylmethacrylamide, 2-hydroxyethylacrylate, 2-hydroxyethylmethacrylate, N-methylolacrylamide and N-methylolmethacrylamide; amino group-containing unsaturated monomers such as diethylaminoethylacrylate, diethylaminoethylmethacrylate, diethylaminopropylacrylate and diethylaminopropylmethacrylate, and quaternary compounds thereof; wherein said water-soluble ethylenically unsaturated monomers may be used alone or in combination of two or more kinds.

2. The method for producing a water-absorbent resin according to claim 1, wherein the amount of the bisoxetane compound is from 0.001 to 3% by mol, based on a total amount of the water-soluble ethylenically unsaturated monomer used for obtaining a water-absorbent resin precursor.

3. The method for producing a water-absorbent resin according to claim 1 or 2, **characterized in that** phosphoric acid or lactic acid is added as a reaction aid during the post-crosslinking reaction.

## Patentansprüche

1. Ein Verfahren zur Herstellung eines wasserabsorbierenden Harzes, **gekennzeichnet durch** Zugeben einer Bisoxetanverbindung der folgenden allgemeinen Formel (1):

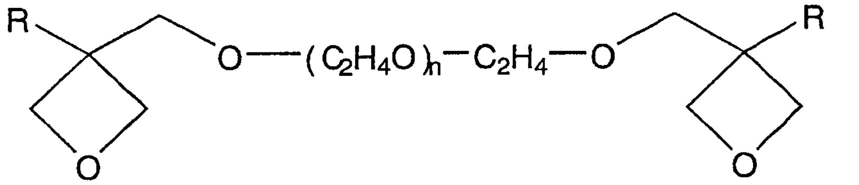

(1)

wobei R eine Alkylgruppe mit 1 bis 6 Kohlenstoffatomen ist; und n eine ganze Zahl von 0 bis 6 ist, zu einem wasserabsorbierenden Harzvorläufer, erhältlich **durch** Polymerisieren von wasserlöslichen ethylenisch ungesättigten Monomeren, und Durchführen einer Nachvernetzungsreaktion mit den Komponenten unter Erwärmen, wobei die wasserlöslichen ethylenisch ungesättigten Monomere ausgewählt sind aus der Gruppe, umfassend Acrylsäure, Methacrylsäure, 2-Acrylamid-2-methylpropansulfonsäure, 2-Methacrylamid-2-methylpropansulfonsäure und deren Alkalimetallsalze; nichtionische ungesättigte Monomere wie Acrylamid, Methacrylamid, N,N-Dimethylacrylamid, N,N-Dimethylmethacrylamid, 2-Hydroxyethylacrylat, 2-Hydroxyethylmethacrylat, N-Methylolacrylamid und N-Methylolmethacrylamid; Aminogruppen enthaltende ungesättigte Monomere wie Diethylaminoethylacrylat, Diethylaminoethylmethacrylat, Diethylaminopropylacrylat und Diethylaminopropylmethacrylat, und quaternäre Verbindungen davon; wobei die wasserlöslichen ethylenisch ungesättigten Monomere allein oder in Kombination von zwei oder mehr Arten verwendet werden können.

2. Das Verfahren zur Herstellung eines wasserabsorbierenden Harzes nach Anspruch 1, wobei die Menge der Bisoxetanverbindung 0,001 bis 3 Mol-% beträgt, bezogen auf die Gesamtmenge des wasserlöslichen ethylenisch ungesättigten Monomers, das zur Gewinnung eines wasserabsorbierenden Harzvorläufers verwendet wird.

3. Das Verfahren zur Herstellung eines wasserabsorbierenden Harzes nach Anspruch 1 oder 2, **dadurch gekennzeichnet, dass** als Reaktionshilfsmittel Phosphorsäure oder Milchsäure während der Nachvernetzungsreaktion zugesetzt wird.

## Revendications

1. Procédé de fabrication d'une résine absorbant l'eau, **caractérisé par** : ajouter un composé bisoxétane représenté par la formule générale suivante (1) :

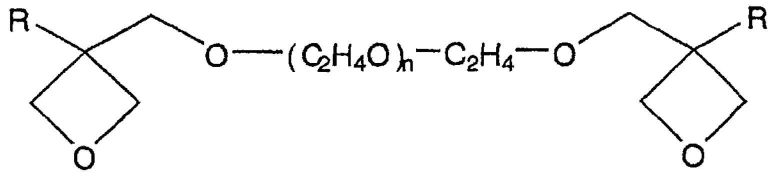

(1)

dans laquelle R est un groupe alkyle ayant 1 à 6 atomes de carbone ; et n est un entier de 0 à 6, à un précurseur de résine absorbant l'eau pouvant être obtenu par polymérisation de monomères à insaturation éthylénique, solubles dans l'eau, et soumettre les composants à une réaction de post-réticulation tout en chauffant, où lesdits monomères à insaturation éthylénique solubles dans l'eau sont choisis dans le groupe comprenant l'acide acrylique, l'acide méthacrylique, l'acide 2-acrylamide-2-méthylpropanesulfonique, l'acide 2-méthacrylamide-2-méthylpropanesulfonique et les sels de métaux alcalins de ceux-ci ; les monomères insaturés non ioniques tels que -l'acrylamide, le méthacrylamide, le N,N-diméthylacrylamide, le N,N-diméthylacrylamide, le N,N-diméthylméthacrylamide, l'acrylate de 2-hydroxyéthyle, le méthacrylate de 2-hydroxyéthyle, le N-méthylolacrylamide et le N-méthylolméthacrylamide ; les monomères insaturés à teneur en groupe amino tels que l'acrylate de diéthylaminoéthyle, le méthacrylate de diéthylaminoéthyle, l'acrylate de diéthylaminopropyle et le méthacrylate de diéthylaminopropyle, et les composés quaternaires de ceux-ci ; où lesdits monomères à insaturation éthylénique solubles dans l'eau peuvent être utilisés individuellement ou en combinaison d'au moins deux sortes.

2. Procédé de fabrication d'une résine absorbant l'eau selon la revendication 1, dans lequel la quantité du composé bisoxétane est de 0,001 à 3 % en moles, sur la base d'une quantité totale du monomère à insaturation éthylénique soluble dans l'eau utilisé pour obtenir un précurseur de résine absorbant l'eau.

3. Procédé de fabrication d'une résine absorbant l'eau selon l'une des revendications 1 ou 2, **caractérisé par le fait que** l'acide phosphorique ou l'acide lactique est ajouté en tant qu'auxiliaire de réaction pendant la réaction de post-réticulation.

[Figure 1]

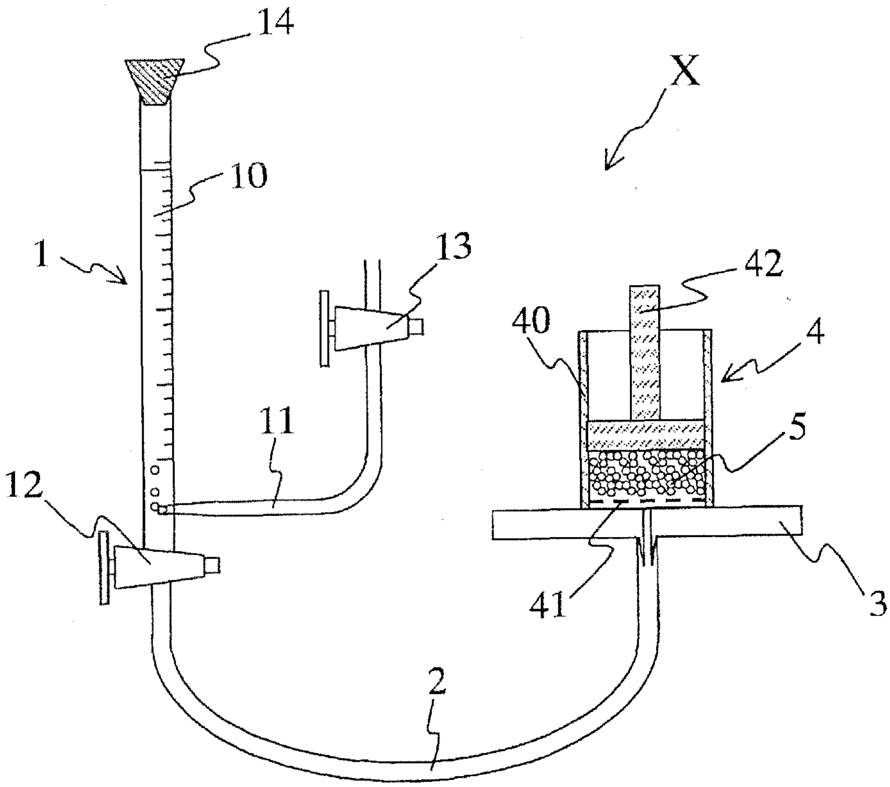

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002194239 A
- JP 2003313446 A
- JP HEI08027278 B
- JP 2000197818 A
- EP 1199327 A
- JP 2000302774 A
- JP 2000319577 A

### Non-patent literature cited in the description

- *Pure Appl. Chem.,* 1993, vol. A30 (2&3), 189
- *Bull. Chem. Soc. Jpn.,* 1988, vol. 61, 1653-1659